# EUROPÄISCHE PATENTSCHRIFT

(11) **EP 2 300 184 B1**
(45) Veröffentlichungstag und Bekanntmachung des Hinweises auf die Patenterteilung: **12.02.2014**
(21) Anmeldenummer: 09780275.5
(22) Anmeldetag: 07.07.2009
(51) Int. Cl.: B23B 29/034, B23B 29/04, B23C 5/00

(54) **WERKZEUG MIT BEFESTIGUNGSEINRICHTUNG**
TOOL COMPRISING A FASTENING UNIT
OUTIL COMPORTANT UN DISPOSITIF DE FIXATION

(30) Priorität: 18.07.2008 DE 102008040563
(43) Veröffentlichungstag der Anmeldung: 30.03.2011
(73) Patentinhaber: Sandvik Intellectual Property AB, 811 81 Sandviken (SE)
(72) Erfinder: FRANK, Peter, 98593 Floh-Seligenthal (DE)
(74) Vertreter: WSL Patentanwälte Partnerschaft mbB
(86) Internationale Anmeldenummer: PCT/EP2009/058623
(87) Internationale Veröffentlichungsnummer: WO 2010/006966

(56) Entgegenhaltungen:
- EP-A- 0 296 373
- CH-A5- 692 449
- DE-A1- 3 204 922

## Beschreibung

Die vorliegende Erfindung betrifft ein Fräs- oder Bohrwerkzeug nach dem Oberbegriff von Anspruch 1 und wie aus der CH 692 449 A5 bekannt.

Dabei kann das Schneidelement mehrteilig, beispielsweise bestehend aus einem Verlängerungsarm und einem darauf befestigten Schneidplattenhalter, ausgebildet sein.

Bei den bekannten Werkzeugen wird das Schneidelement lediglich mit Hilfe von Schrauben am Werkzeuggrundkörper befestigt. Damit verbunden ist jedoch eine relativ hohe Positionsungenauigkeit, da die exakte Position des Schneidelementes auf dem Werkzeuggrundkörper von dem Spiel bzw. der Fertigungstoleranz der verwendeten Schrauben abhängt.

Grundsätzlich könnte die Positioniergenauigkeit durch die Verwendung von Schrauben mit kleinem Durchmesser verbessert werden. Dies hat jedoch zur Folge, dass die aufzunehmenden Kräfte für manche Anwendungsfälle nicht mehr von nur zwei oder drei Schrauben aufgenommen werden können. Da das Schneidelement mit dem zu bearbeitenden Werkstück in Eingriff tritt, können abhängig von der Vorschubgeschwindigkeit und der Art des zu bearbeitenden Materials erhebliche Kräfte am Schneidelement auftreten, die über die Befestigung am Werkzeuggrundkörper aufgenommen werden müssen.

Es müssen daher zusätzlich Schrauben mit größerem Durchmesser oder eine Vielzahl von Schrauben verwendet werden, um das Schneidelement am Werkzeuggrundkörper zu befestigen. Eine Vielzahl von Schrauben führt jedoch zu einer deutlichen Verlängerung der Rüst- und Umrüstzeit.

Die CH 692 449 und die DE 32 04 922 zeigen alternative Befestigungseinrichtungen. Es ist daher vor dem Hintergrund des beschriebenen Standes der Technik Aufgabe der Erfindung, ein Befestigungssystem zur Befestigung des mindestens einen Schneidelementes am Werkzeuggrundkörper bereitzustellen, das einfach mit geringen Kosten zu verwirklichen ist, eine hochgenaue Positionierung des Schneidelementes am Werkzeuggrundkörper erlaubt und zudem einen sehr schnellen Austausch des Schneidelementes ermöglicht.

Erfindungsgemäß wird diese Aufgabe durch ein Werkzeug gemäß Anspruch 1 gelöst. Mit anderen Worten könnte entweder der Werkzeuggrundkörper einen Zentrierstift und das Schneidelement eine entsprechende Zentrieröffnung aufweisen oder der Zentrierstift könnte am Schneidelement angeordnet sein, während der Werkzeuggrundkörper die Zentrieröffnung aufweist.

Zur Positionierung des Schneidelementes gegenüber dem Werkzeuggrundkörper muss dann lediglich der Zentrierstift in die entsprechende Zentrieröffnung eingesetzt werden. Sowohl Zentrierstift als auch Zentrieröffnung können hochpräzise gefertigt werden, so dass beim Einsetzen des Stiftes in die Öffnung die Positionierung von Schneidelement und Werkzeuggrundkörper zueinander sehr genau ist. Dabei ist der Zentrierstift mit Vorteil von der Werkzeugachse beabstandet, so dass sich das Schneidelement nicht bis zur Bohrachse erstrecken muss und gegebenenfalls mehrere Schneidelement auf dem Werkzeuggrundkörper angeordnet werden können.

Es hat sich gezeigt, dass der Zentrierstift am besten am Schneidelement angeordnet ist.

Grundsätzlich erlaubt das Vorsehen von Zentrierstift und Zentrieröffnung eine relative Drehung des Schneidelementes gegenüber dem Werkzeuggrundkörper um den Stift. Um dies zu verhindern, sieht die Erfindung vor, dass zusätzlich ein Nutenstein an dem Werkzeuggrundkörper oder dem Schneidelement und eine korrespondierende Nut an dem anderen Element vorgesehen ist, wobei der Nutenstein zumindest teilweise in die Nut eingreift. Mit anderen Worten könnte der Werkzeuggrundkörper einen Nutenstein aufweisen, der in eine im Schneidelement eingebrachte Nut eingreift oder das Schneidelement könnte einen Nutenstein aufweisen, der in eine entsprechende im Werkzeuggrundkörper vorgesehen Nut eingreift. Selbstverständlich könnten auch mehrere Nutensteine vorgesehen sein.

In einer besonders bevorzugten Ausführungsform ist der Zentrierstift als separates Teil ausgebildet, so dass er von dem einen Teil lösbar ist. Beispielsweise könnte daher sowohl Werkzeuggrundkörper als auch Schneidelement jeweils eine Zentrieröffnung aufweisen, in die dann der Zentrierstift eingesetzt wird. Diese Ausführungsform hat den Vorteil, dass die Herstellung des den Zentrierstift aufweisenden Teil kostengünstiger wird. Ist nämlich der Zentrierstift einstückig mit dem Werkzeuggrundkörper oder dem Schneidelement verbunden, so muss zur Herstellung eine relativ große Materialmenge am Werkzeuggrundkörper oder vom Schneidelement entfernt werden. Dies erhöht die Materialkosten und die Herstellungsdauer.

In einer weiteren bevorzugten Ausführungsform ist der Zentrierstift als Zentrierhülse ausgebildet und weist vorzugsweise einen Durchmesser d von mehr als 2 cm, besonders bevorzugt von mehr als 5 cm auf. Mit Vorteil ist der Durchmesser d größer als 10% des Bohr- oder Fräsdurchmessers.

Die Ausbildung des Zentrierstiftes als Zentrierhülse verringert das Gewicht des Werkzeugs. Das Vorsehen eines Zentrierstiftes bzw. einer Zentrierhülse mit großem Durchmesser erhöht die von dem Stift bzw. der Hülse aufnehmbaren Kräfte.

Dabei kann zusätzlich vorgesehen sein, dass der Nutenstein von dem Element an dem er befestigt ist, lösbar ist. So könnten in einer bevorzugten Ausführungsform beispielsweise sowohl Werkzeuggrundkörper als auch Schneidelement eine Nut aufweisen, wobei der Nutenstein in einer der beiden Nuten befestigt ist und beim Befestigen des Schneidelementes am Werkzuggrundkörper in die andere Nut eingreift.

Unter einem Nutenstein wird jedes Element verstanden, dass eine Anlagefläche aufweist, die derart ausgebildet ist, dass sie in der entsprechenden Nut an mindestens einer Nutwand anliegen kann.

Durch diese Maßnahme wird die Positioniergenauigkeit des Schneidelementes auf dem Werkzeuggrundkörper weiter verbessert.

Beispielsweise kann der Nutenstein zwei Befestigungsbohrungen aufweisen, wobei die erste Befestigungsbohrung zur Befestigung des Nutensteins an dem einen Element vorgesehen ist und die zweite Befestigungsbohrung zur Befestigung des anderen Elements an dem Nutenstein oder dem einen Element vorgesehen ist. Weiterhin kann es von Vorteil sein, dass die erste Nut auf einer Sekante durch die Zentrieröffnung liegt, wobei die Sekante vorzugsweise durch den Mittelpunkt der Zentrieröffnung läuft. Dadurch ist eine optimale Kraftaufnahme über Zentrierstift und Nutenstein gewährleistet.

In einer bevorzugten Ausführungsform ist weiterhin vorgesehen, dass der Zentrierstift weiter von der Werkzeugachse entfernt angeordnet ist als der Nutenstein. Mit anderen Worten liegt vorzugsweise der Nutenstein auf der Linie, welche die Werkzeugachse mit dem Mittelpunkt der Zentrieröffnung verbindet.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Diese zeigen:
- Figur 1: eine perspektivische Ansicht einer Ausführungsform der Erfindung,
- Figur 2: eine Seitenansicht der Ausführungsform von Figur 1,
- Figur 3: eine weitere perspektivische Ansicht der Ausführungsform von Figur 1,
- Figur 4: eine Ansicht von unten auf die Ausführungsform der Figur 1,
- Figur 5: eine vergrößerte Detaileinsicht von oben auf einen Werkzeuggrundkörper,
- Figur 6: eine vergrößerte Schnittansicht des Werkzeuggrundkörpers von Figur 5,
- Figur 7: eine vergrößerte Schnittansicht des Werkzeuggrundkörpers von Figur 6 mit aufgesetztem Verlängerungsarm und
- Figur 8: eine vergrößerte Detailansicht auf den Werkzeuggrundkörper von Figur 5 mit aufgesetztem Verlängerungsarm.

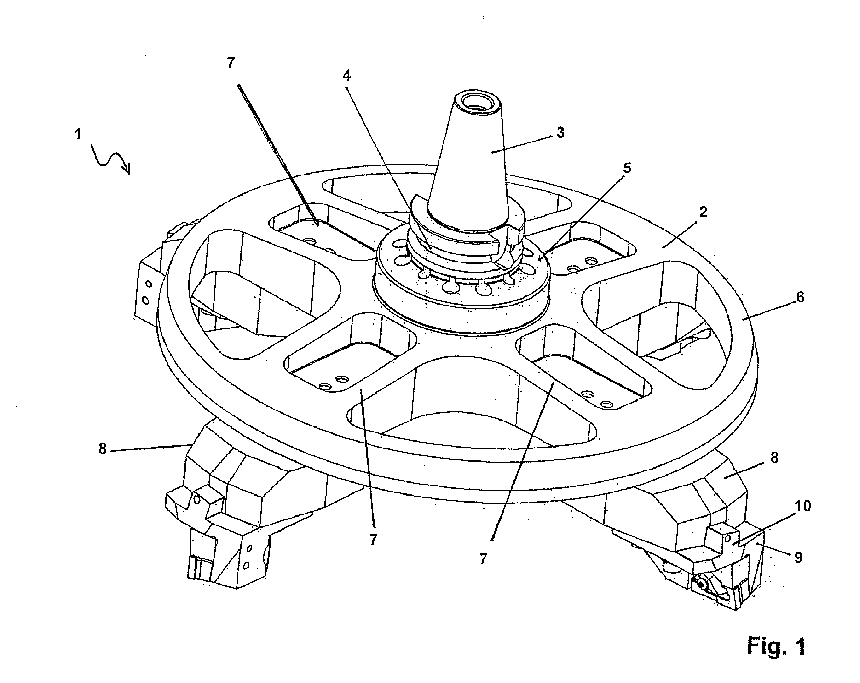

In Figur 1 ist eine perspektivische Ansicht einer Ausführungsform der Erfindung gezeigt. Ein Ausbohrwerkzeug 1 weist einen Werkzeuggrundkörper 2 auf, der eine Schnittstelle 3 zu einem entsprechenden Antrieb aufweist. Die Schnittstelle 3 besteht hier aus einem steilkegelförmigen Schaft 3 an dessen dem Werkzeuggrundkörper 2 zugewandten Ende eine Greifrille 4 sowie ein Flansch 5 zur axialen Abstützung angeordnet sind. Die Schnittstelle kann auch als separates Bauteil ausgebildet sein, das mit dem Werkzeuggrundkörper 2 verbunden werden kann. Der Werkzeuggrundkörper weist hier einen radförmigen Abschnitt 6 auf, der mit einem innenliegenden Nabenabschnitt über entsprechende Speichenabschnitte 7 verbunden ist. An dem Werkzeuggrundkörper 2 bzw. an dessen Speichenabschnitten 7 sind Verlängerungsarme 8 angebracht. Die gezeigte Ausführungsform weist vier Speichenabschnitte 7 auf, an denen jeweils ein Verlängerungsarm angebracht ist. Auf dem Verlängerungsarm 8 ist ein Schneidplattenhalter 9 aufgenommen, der einen stegartigen Vorsprung 10 aufweist, welcher in einer Nut 11 des Verlängerungsarm liegt.

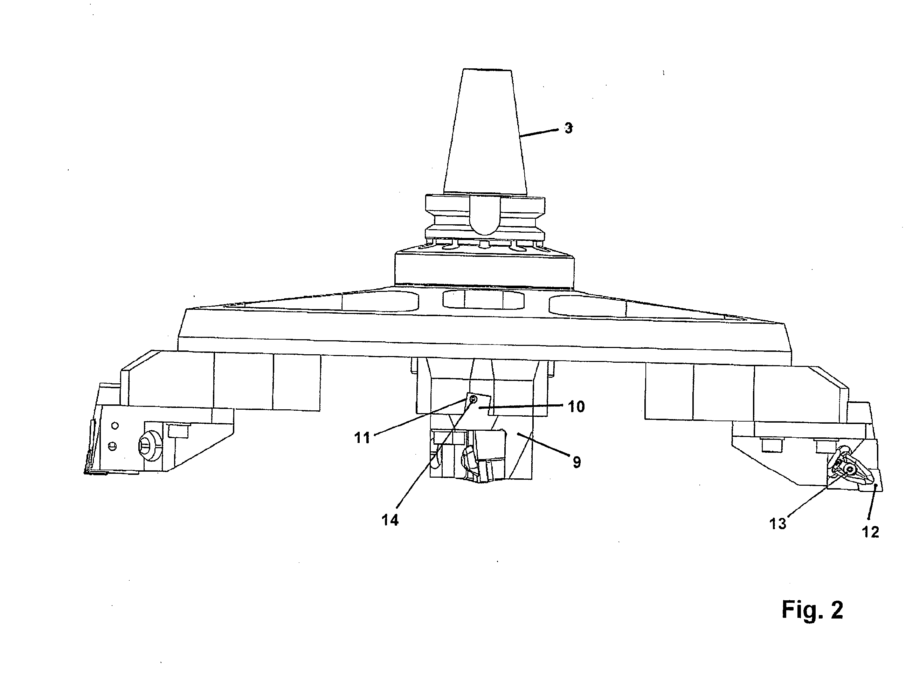

Figur 2 zeigt eine Seitenansicht der Ausführungsform von Figur 1. Man erkennt hier, dass der Schneidplattenhalter 9 einen Sitz für eine Schneidplatte 12 aufweist, die mit Hilfe einer Klemme 13 auf dem Schneidplattenhalter gehalten wird. Bei dem in Figur 2 in der Mitte gezeigten Verlängerungsarm 8 kann man am Besten erkennen, dass der stegartige Vorsprung 10 leicht geneigt ist, was im Betrieb zu einer besseren axialen Anpressung führt. Die Schraube 14, die innerhalb des stegartigen Vorsprungs 10 angeordnet ist, dient zur radialen Verschiebung des Schneidplattenhalters 9 innerhalb der Nut 11 des Verlängerungsarmes 8.

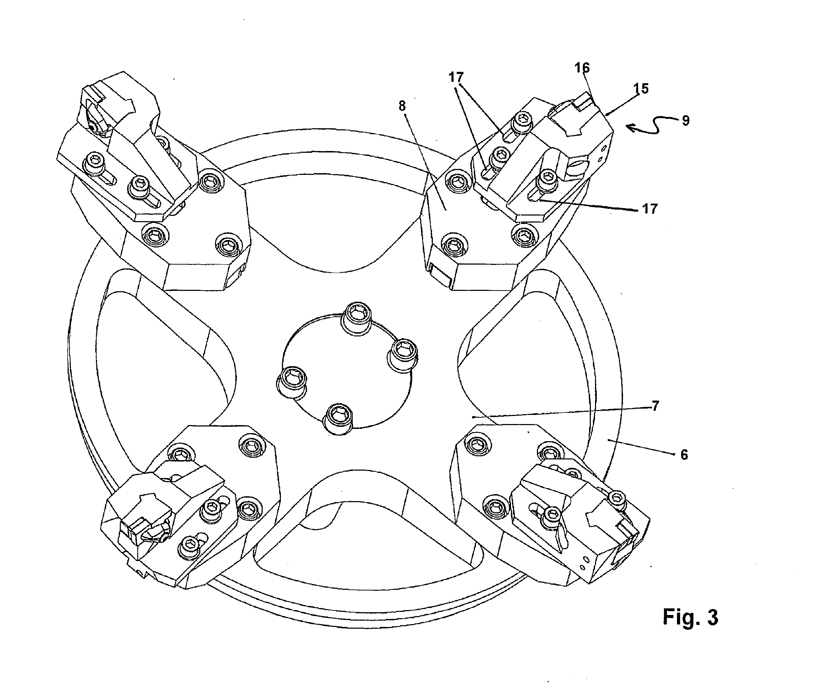

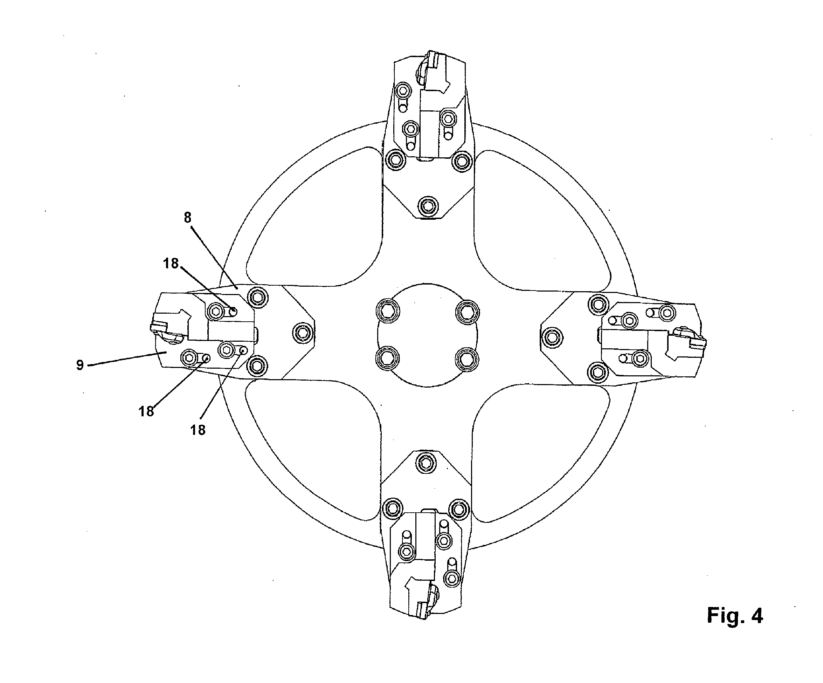

In Figur 3 ist eine perspektivische Ansicht von unten und in Figur 4 eine Draufsicht von unten auf die Ausführungsform der Figuren 1 und 2 gezeigt. Man erkennt hier deutlich, dass der Werkzeuggrundkörper 2 aus einem inneren Nabenabschnitt, einem radförmigen Abschnitt 6 sowie vier Speichenabschnitten 7 besteht. Die Verlängerungsarme 8 sind auf die Speichenabschnitte 7 aufgeschraubt. Der Schneidplattenhalter 9, der seinerseits aus einem Schieberkörper 15 sowie einem darin aufgenommenem Halteelement 16, welches den Schneidplattensitz umfasst, besteht, hat zumindest ein Langloch, im gezeigten Beispiel sind drei Langlöcher 17 zu erkennen. Der Verlängerungsarm 8 weist eine entsprechende Anzahl von Gewindebohrungen 18 auf, so dass der Schneidplattenhalter 9 aufgrund der Langlöcher 17 in radialer Richtung verstellt werden kann. Dies erfolgt, wie bereits erwähnt, mit Hilfe der Einstellschraube 14 (siehe Figur 2).
Das eingangs erwähnte Schneidelement ist bei der gezeigten Ausführungsform mehrteilig ausgeführt und besteht aus dem Verlängerungsarm 8, dem Schieberkörper 15 sowie dem darauf angeordneten Halteelement 16.

Selbstverständlich kann auf den Verlängerungsarm auch verzichtet werden und der Schieberkörper 15 direkt am Werkzeuggrundkörper 2 befestigt werden.

In der Ansicht von Figur 4 kann man deutlich erkennen, dass der Verlängerungsarm 8 eine zweiten Satz von Gewindebohrungen 18 aufweist. Der Schneidplattenhalter 9 kann daher vollständig vom Verlängerungsarm 8 gelöst werden und mit Hilfe der zusätzlichen Gewindebohrungen an einer radial dazu beabstandeten Position wieder befestigt werden. Auch in der neuen Position erlauben die Langlöcher 17 eine gewisse radiale Verstellung des Schneidplattenhalters relativ zu den Verlängerungsarmen 8.

Um den Bereich von Bohrdurchmessern zu erweitern, kann jedoch nicht nur der Schneidplattenhalter relativ zum Verlängerungsarm versetzt werden, sondern es ist zudem möglich, einen anders gestalteten Verlängerungsarm 8 oder einen anders gestalteten Werkzeuggrundkörper 2 zu verwenden. Weiterhin ist es möglich, den Werkzeuggrundkörper mit einer anderen Anzahl von Speichenabschnitten zu verwenden. Zudem ist es nicht unbedingt notwendig, dass die einzelnen Speichenabschnitte in Umfangsrichtung äquidistant angeordnet sind. Im Gegenteil, bei einer sogenannten differentiellen Teilung hat sich gezeigt, dass Schwingungen, die im Betrieb auftreten könnten, minimiert werden können.

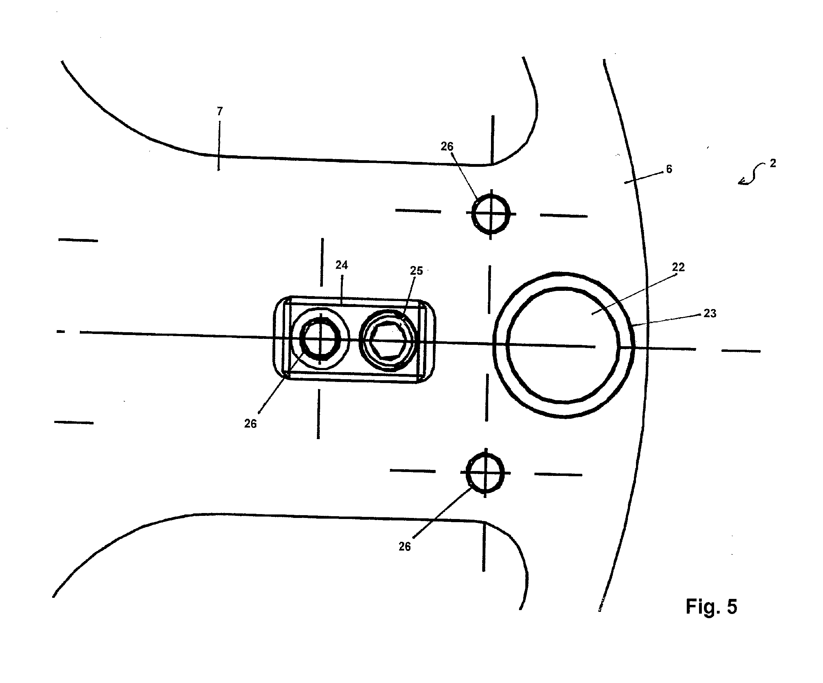

Im Folgenden wird anhand der Figuren 5 bis 8 die Befestigung des Verlängerungsarm 8 am Werkzeuggrundkörper 2 erläutert. In Figur 5 ist eine vergrößerte Detailansicht des Werkzeuggrundkörpers 2 gezeigt. Der hier dargestellte Werkzeuggrundkörper 2 entspricht der in den Figuren 1 bis 4 gezeigten Ausführungsform. Diese Befestigungsart kann prinzipiell nicht nur bei der hier gezeigten Ausführungsform verwendet werden, sondern generell zur Befestigung zweier Werkzeugteile aneinander.

Der Werkzeuggrundkörper 2 weist eine kreisförmige Ausnehmung 22 (Sackbohrung) auf, in die eine Zentrierhülse 23 eingesetzt ist. Weiterhin ist ein Nutenstein 24 vorgesehen, der mit Hilfe einer Nutensteinbefestigungsschraube 25 auf dem Werkzeuggrundkörper 2 befestigt ist. Der Nutenstein 24 weist zwei Durchgangsbohrungen auf, wovon eine zur Befestigung des Nutensteins 24 am Werkzeuggrundkörper 2 mit Hilfe der Nutensteinbefestigungsschraube 25 dient. Die andere Bohrung verläuft koaxial zu einer der drei Befestigungsbohrungen 26. Die Befestigungsbohrungen 26 dienen der Befestigung des Verlängerungsarms 8 am Werkzeuggrundkörper 2.

Man erkennt, dass die beiden Durchgangsbohrungen des Nutensteins 24 sowie die Sackbohrung 22 nur in radialer Richtung, nicht jedoch in Umfangsrichtung voneinander beabstandet sind. Die entsprechenden Bohrungen liegen somit alle auf einer Linie, die schematisch dargestellt ist.

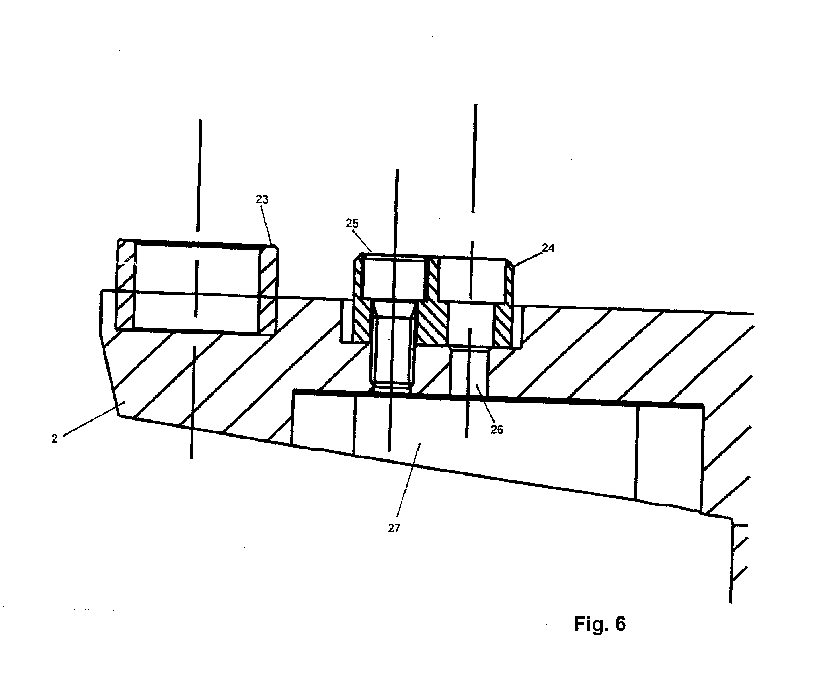

In Figur 6 ist eine Schnittansicht durch die Ausführungsform von Figur 5 gezeigt. Man erkennt den Werkzeuggrundkörper 2, der an seiner Unterseite eine Kammer 27 aufweist. Weiterhin ist die Zentrierhülse 23 zu erkennen, die in der Sackbohrung 22 angeordnet ist. Die axiale Länge der Zentrierhülse 23 ist größer als die Tiefe der Sackbohrung 22, so dass die Zentrierhülse 23 in axialer Richtung über den Werkzeuggrundkörper 2 hervorsteht. Man erkennt weiterhin, dass der Nutenstein 24 in einer entsprechenden Nut im Werkzeuggrundkörper 2 aufgenommen ist. Zur Befestigung des Nutensteins 24 in der Nut greift eine Befestigungsschraube 25 durch eine entsprechende Stufenbohrung im Nutenstein 24 in eine Gewindebohrung im Werkzeuggrundkörper 2. Der Nutenstein weist eine zweite Bohrung auf, die koaxial zu einer weiteren, im Werkzeuggrundkörper 2 angeordneten Gewindebohrung 26 angeordnet ist.

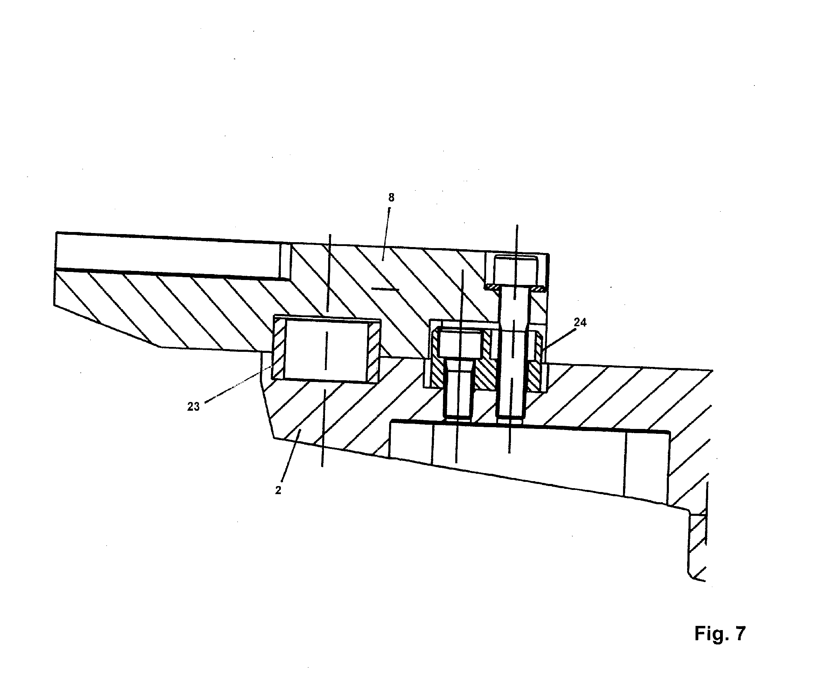

Figur 7 zeigt die gleiche Schnittansicht wie Figur 6, wobei jedoch in Figur 7 ein Verlängerungsarm 8, der Teil des am Werkzeuggrundkörper zu befestigenden Halteelementes ist, auf dem Werkzeuggrundkörper 2 befestigt ist. Man erkennt, dass der Verlängerungsarm 8 an seiner Unterseite eine ähnlich kreisförmige Aussparung aufweist, wie der Werkzeuggrundkörper 2, so dass die Zentrierhülse 23 sich von der Sackbohrung 22 des Werkzeuggrundkörpers 2 in die kreisförmige Aussparung im Verlängerungsarm 8 erstreckt. Durch die Zentrierhülse 23 wird eine lagegenaue Positionierung des Verlängerungsarms 8 in Bezug auf den Werkzeuggrundkörper 2 erreicht. Um eine Verdrehung des Verlängerungsarms 8 relativ zum Werkzeuggrundkörper 2 zu verhindern, ist der Nutenstein 24 vorgesehen. Der Verlängerungsarm 8 weist an seiner Unterseite eine entsprechende Nut auf, in die der Nutenstein 24, eingreifen kann. Zur Befestigung des Verlängerungsarms 8 am Werkzeuggrundkörper 2 dienen drei Befestigungsschrauben, mit denen der Verlängerungsarm 8 am Werkzeuggrundkörper 2 festgeschraubt wird. Eine dieser Schrauben greift, wie in Figur 7 zu sehen ist, durch eine entsprechende Bohrung im Nutenstein 24 in den Werkzeuggrundkörper 2 ein.

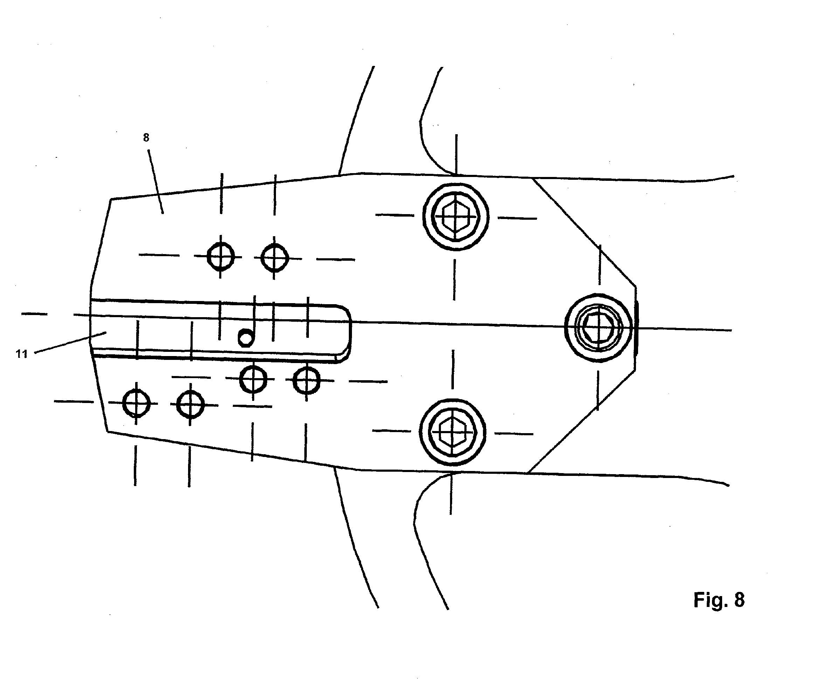

In Figur 8 ist eine Draufsicht auf den Werkzeuggrundkörper 2 gezeigt, ähnlich der von Figur 5, wobei hier jedoch der Verlängerungsarm 8 am Werkzeuggrundkörper 2 befestigt ist.

### Bezugszeichenliste

- 1: Ausbohrwerkzeug
- 2: Werkzeuggrundkörper
- 3: Schnittstelle
- 4: Greifrille
- 5: Flansch
- 6: radförmiger Abschnitt
- 7: Speichenabschnitte
- 8: Verlängerungsarm
- 9: Schneidplattenhalter
- 10: stegartiger Vorsprung
- 11: Nut
- 12: Schneidplatte
- 13: Klemme
- 14: Schraube
- 15: Schieberkörper
- 16: Halteelement
- 17: Langlöcher
- 18: Gewindebohrung
- 22: Sackbohrung
- 23: Zentrierhülse
- 24: Nutenstein
- 25: Nutensteinbefestigungsschraube
- 26: Befestigungsbohrungen
- 27: Kammer

## Patentansprüche

1. Fräs- oder Bohrwerkzeug (1) mit einem um eine Werkzeugachse drehbaren Werkzeuggrundkörper (2) und einem am Werkzeuggrundkörper (2) befestigbaren Schneidelement, welches einen Schneidabschnitt oder einen Schneidplattensitz zur Aufnahme einer Schneidplatte (12) aufweist, wobei ein parallel zur Bohrachse angeordneter Zentrierstift, dessen Achse nicht mit der Werkzeugachse übereinstimmt, an einem Teil, dem Werkzeuggrundkörper (2) oder dem Schneidelement (16) vorgesehen ist, und eine entsprechende Zentrieröffnung an dem anderen Teil, dem Schneidelement oder dem Werkzeuggrundkörper (2) vorgesehen ist, **dadurch gekennzeichnet, dass** ein Nutenstein (24) an dem Werkzeuggrundkörper (2) oder dem Schneidelement (16) und eine korrespondierende erste Nut (11) an dem anderen Element vorgesehen ist, wobei der Nutenstein (24) zumindest teilweise in die erste Nut (11) eingreift.

2. Fräs- oder Bohrwerkzeug (1) nach Anspruch 1, **dadurch gekennzeichnet, dass** der Zentrierstift von dem einen Teil lösbar ist.

3. Fräs- oder Bohrwerkzeug (1) nach Anspruch 1 oder 2, **dadurch gekennzeichnet, dass** der Zentrierstift als Zentrierhülse ausgebildet ist und vorzugsweise einen Durchmesser d von mehr als 2 cm, besonders bevorzugt von mehr als 5 cm aufweist.

4. Fräs- oder Bohrwerkzeug (1) nach einem der Ansprüche 1 bis 3, **dadurch gekennzeichnet, dass** der Nutenstein (24) von dem einen Element lösbar ist, wobei vorzugsweise das eine Element eine zweite Nut (11) aufweist, in welcher der Nutenstein (24) teilweise aufgenommen und befestigt ist.

5. Fräs- oder Bohrwerkzeug (1) nach Anspruch 4, **dadurch gekennzeichnet, dass** der Nutenstein (24) zwei Befestigungsbohrungen aufweist, wobei die erste Befestigungsbohrung (26) zur Befestigung des Nutensteins (24) an dem einen Element vorgesehen ist und die zweite Befestigungsbohrung (26) zur Befestigung des anderen Element an dem Nutenstein oder dem einen Element.

6. Fräs- oder Bohrwerkzeug (1) nach einem der Ansprüche 1 bis 5, **dadurch gekennzeichnet, dass** die erste Nut auf einer Sekante durch die Zentrieröffnung liegt, wobei die Sekante vorzugsweise durch den Mittelpunkt der Zentrieröffnung verläuft.

7. Fräs- oder Bohrwerkzeug (1) nach einem der Ansprüche 1 bis 6, **dadurch gekennzeichnet, dass** der Zentrierstift weiter von der Werkzeugachse entfernt angeordnet ist als der Nutenstein (24).

8. Fräs- oder Bohrwerkzeug (1) nach einem der Ansprüche 1 bis 7, **dadurch gekennzeichnet, dass** mindestens zwei Schneidelemente vorgesehen sind.

## Claims

1. A milling or boring tool (1) comprising a main tool body (2) rotatable about a tool axis and a cutting element which can be fastened to the main tool body (2) and which has a cutting portion or a cutting insert seat for receiving a cutting insert (12), wherein a centring pin which is arranged parallel to the boring axis and the axis of which does not coincide with the tool axis is connected on one part, the main tool body (2) or the cutting element (16), and a corresponding centring opening is provided on the other part, the cutting element or the main tool body (2), **characterised in that** there is provided a slot nut (24) on the main tool body (2) or the cutting element (16) and there is provided a corresponding first slot (11) on the other element, wherein the slot nut (24) at least partially engages into the first slot (11).

2. A milling or boring tool (1) according to claim 1 **characterised in that** the centring pin is releasable from the one part.

3. A milling or boring tool (1) according to claim 1 or claim 2 **characterised in that** the centring pin is in the form of a centring sleeve and is preferably of a diameter d of more than 2 cm, particularly preferably more than 5 cm.

4. A milling or boring tool (1) according to one of claims 1 to 3 **characterised in that** the slot nut (24) is releasable from the one element, wherein preferably the one element has a second slot (11) in which the slot nut (24) is partially received and fastened.

5. A milling or boring tool (1) according to claim 4 **characterised in that** the slot nut (24) has two fastening bores, wherein the first fastening bore (26) for fastening the slot nut (24) is provided on the one element and the second fastening bore (26) for fastening the other element is provided on the slot nut or the one element.

6. A milling or boring tool (1) according to one of claims 1 to 5 **characterised in that** the first slot is on a secant through the centring opening, wherein the secant preferably extends through the centre point of the centring opening.

7. A milling or boring tool (1) according to one of claims 1 to 6 **characterised in that** the centring pin is arranged further away from the tool axis than the slot nut (24).

8. A milling or boring tool (1) according to one of claims 1 to 7 **characterised in that** there are provided at least two cutting elements.

## Revendications

1. Outil de fraisage ou de perçage (1) comprenant un corps de base d'outil (2) qui peut tourner autour d'un axe d'outil et un élément de coupe qui peut être fixé au corps de base d'outil (2) et qui présente un segment de coupe ou un logement de plaquette de coupe destiné à recevoir une plaquette de coupe (12), dans lequel une tige de centrage disposée parallèlement à l'axe de perçage, dont l'axe ne coïncide pas avec l'axe d'outil, est prévue sur une première partie, le corps de base d'outil (2) ou l'élément de coupe (16), et une ouverture de centrage correspondante est prévue sur l'autre partie, l'élément de coupe ou le corps de base d'outil (2), **caractérisé en ce qu'**une clavette (24) est prévue sur le corps de base d'outil (2) ou sur l'élément de coupe (16) et une première rainure correspondante (11) est prévue sur l'autre élément, la clavette (24) étant au moins partiellement engagée dans la première rainure (11).

2. Outil de fraisage ou de perçage (1) selon la revendication 1, **caractérisé en ce que** la tige de centrage peut être séparée de la première partie.

3. Outil de fraisage ou de perçage (1) selon la revendication 1 ou 2, **caractérisé en ce que** la tige de centrage est constituée par une douille de centrage et présente de préférence un diamètre d de plus de 2 cm, plus particulièrement de plus de 5 cm.

4. Outil de fraisage ou de perçage (1) selon l'une des revendications 1 à 3, **caractérisé en ce que** la clavette (24) peut être séparée du premier élément, le premier élément présentant de préférence une seconde rainure (11) dans laquelle la clavette (24) est logée partiellement et fixée.

5. Outil de fraisage ou de perçage (1) selon la revendication 4, **caractérisé en ce que** la clavette (24) présente deux perçages de fixation, le premier perçage de fixation (26) étant prévu pour la fixation de la clavette (24) au premier élément et le second perçage de fixation (26) étant prévu pour la fixation de l'autre élément à la clavette ou au premier élément.

6. Outil de fraisage ou de perçage (1) selon l'une des revendications 1 à 5, **caractérisé en ce que** la première rainure se trouve sur une sécante passant par l'ouverture de centrage, la sécante passant de préférence par le centre de l'ouverture de centrage.

7. Outil de fraisage ou de perçage (1) selon l'une des revendications 1 à 6, **caractérisé en ce que** la tige de centrage est plus éloignée de l'axe de l'outil que la clavette (24).

8. Outil de fraisage ou de perçage (1) selon l'une des revendications 1 à 7, **caractérisé en ce qu'**il comporte au moins deux éléments de coupe.
